# EUROPÄISCHE PATENTSCHRIFT

(11) **EP 2 190 697 B1**
(45) Veröffentlichungstag und Bekanntmachung des Hinweises auf die Patenterteilung: **13.03.2013**
(21) Anmeldenummer: 08774836.4
(22) Anmeldetag: 07.07.2008
(51) Int. Cl.: B60R 21/0132

(54) **STEUERGERÄT UND VERFAHREN ZUR ANSTEUERUNG VON PERSONENSCHUTZMITTELN**
CONTROL DEVICE AND METHOD FOR ACTIVATING PASSENGER PROTECTION MEANS
APPAREIL DE COMMANDE ET PROCÉDÉ DE DÉCLENCHEMENT DE MOYENS DE PROTECTION DES PERSONNES

(30) Priorität: 03.09.2007 DE 102007041847
(43) Veröffentlichungstag der Anmeldung: 02.06.2010
(73) Patentinhaber: Robert Bosch GmbH, 70442 Stuttgart (DE)
(72) Erfinder: SCHUETZE, Norman, 71254 Ditzingen (DE)
(86) Internationale Anmeldenummer: PCT/EP2008/058783
(87) Internationale Veröffentlichungsnummer: WO 2009/030544

(56) Entgegenhaltungen:
- WO-A-2004/087468
- DE-A1- 10 334 235
- DE-A1-102004 056 416
- DE-A1-102005 002 721
- DE-C1- 10 111 266

## Beschreibung

### Stand der Technik

Die Erfindung betrifft ein Steuergerät bzw. ein Verfahren zur Ansteuerung von Personenschutzmitteln nach der Gattung der unabhängigen Patentansprüche.

Aus DE 10 2004 056 416 A1 ist es bereits bekannt in einem Steuergerät einen Prozessor beispielsweise einen Mikrocontroller und als beispielsweise eine weitere Komponente einen Beschleunigungssensor vorzusehen, wobei diese Komponenten miteinander zur Datenübertragung verbunden sind. Der Mikrocontroller und die Beschleunigungssensorik bewirken die Ansteuerung der Personenschutzmittel.

Aus der gattungsgemäßen WO2004/087468 A1 ist es bekannt, dass ein Prozessor eines Airbagsteuergeräts einen sogenannten Asic-Reset durchführen kann, bei dem die Endstufen und die Sensorbauteile zu einem Neustart veranlasst werden. Weiterhin ist es aus dieser Entgegenhaltung bekannt, dass der Prozessor über einen SPI-Bus mit einem Sicherheitsbaustein und den Sensorbausteinen sowie einem Schnittstellenbaustein verbunden ist. Dieser Prozessor ist als Mikrocontroller über einen weiteren SPI-Bus mit einem Speicher, einem Endstufen-IC und einem weiteren Endstufen-IC verbunden. Solch ein SPI-Bus ist beispielsweise auch aus der Application-Note von Freescale Semiconductor aus dem Jahre 2005 bekannt Dieses Dokument ist als AN3020 offenbart worden. Der Autor ist David Babin und der Titel "Configuring and using the SPI".

### Offenbarung der Erfindung

Das erfindungsgemäße Steuergerät bzw. das erfindungsgemäße Verfahren zur Ansteuerung von Personenschutzmitteln mit den Merkmalen der unabhängigen Patentansprüche haben demgegenüber den Vorteil, dass die wenigstens eine weitere Komponente in Abhängigkeit von dem Signal eine Einstellung und wenigstens ein Reset vornimmt, nachdem die Auswerteschaltung in Abhängigkeit von einem Ereignis das Signal zu der wenigstens einen Komponente übertragen hatte. Damit ist es vorteilhafterweise möglich, Komponenten wie Sensoren vorzusehen, die selbst keinen Reseteingang haben, aber erfindungsgemäß dennoch resetiert werden können. Dazu nutzt man beispielsweise die in der wenigstens einer weiteren Komponente enthaltene Funktion des internen Resets, die unter anderem auch bei einem Power-Up-Reset ausgeführt wird, die mit einer weiteren Einstellung verknüpft wird, so dass das Signal durch die Aktivierung der weiteren Einstellung mit diesem internen Reset verknüpft wird. Damit kann dann in einer Initialisierungsphase durch ein

entsprechendes Signal die wenigstens eine weitere Komponente zu einem Reset veranlasst werden, ohne dass ein separater Reseteingang vorliegen muss.

Die Erfindung nutzt dabei die Eigenschaft von einigen elektrischen Geräten, dass, wenn eine Einstellung vorgenommen wurde, ein Reset indiziert ist, um das jeweilige elektrische Gerät mit seiner neuen Einstellung in einen definierten Zustand zu bringen. Vorliegend kann diese Einstellung schon erfolgt sein, aber sie wird zum Zwecke des Resets bei dem Fehlerereignis noch einmal durchgeführt.

Die Alternative die Spannungsversorgung abzuschalten ist nicht bei Fehlern des Steuergeräts in jedem Falle möglich. Erfindungsgemäß können jedoch alle Fälle abgedeckt werden, bei denen die Auswerteschaltung beispielsweise ein Mikrocontroller an allen Komponenten im Steuergerät ein Reset auslöst, ohne dass die Spannungsversorgung dabei abgeschaltet wird.

Damit ist es möglich, ohne zusätzlichen Aufwand an Hardware einen Reset im laufenden Betrieb des Steuergeräts an der wenigstens einer Komponente auslösen zu können. Der Reset soll weiterhin ohne zusätzliche neue Softwarearchitektur im Steuergerät erzeugt werden können. Weiterhin wird vorteilhafterweise das Rücksetzen immer zeitnah in Verbindung mit dem Reset der restlichen Komponenten, gewöhnlich ausgelöst über den Low-Pegel auf einer Resetleitung, ausgelöst. Das ist besonders wichtig, da nach einem erneuten Start des Mikrocontrollers alle Komponenten bestimmten Tests und Programmierroutinen unterzogen werden.

Vorteilhafterweise ermöglicht die Erfindung, dass die wenigstens eine Komponente beispielsweise verschiedene vorgegebene Kommunikationsprotokolle aufweist und somit für unterschiedliche Hersteller geeignet ist. Das Protokoll wird beispielsweise durch einen SPI-Befehl ausgewählt, wobei dieser SPI-Befehl von allen Protokollen verstanden wird. Solange jedoch kein SPI-Protokoll ausgewählt wurde werden alle anderen SPI-Befehle aus Sicherheitsgründen von der wenigstens einen Komponente ignoriert. Damit ist eine feste Reihenfolge bei der Initialisierung der wenigstens einen Komponente durch die Software in der Auswerteschaltung vorgegeben. Weiterhin wird erfindungsgemäß vermieden dass die Software bei der Initialisierung der wenigstens einen Komponente zwischen zwei Programmroutinen in Abhängigkeit des vorherigen Betriebszustands des Steuergeräts unterscheiden muss.

Erfindungsgemäß wird das Signal mit einem internen Reset in der wenigsten einen Komponente verknüpft. Da für die Initialisierung bzw. Programmierung der wenigstens einen Komponente immer bestimmte Befehlsabfolgen von der Software eingehalten werden müssen, lässt sich dies erfindungsgemäß in einfacher Art und Weise realisieren.

Die Auswahl des Protokolls muss immer zu Beginn, also vor der Auswahl der Verstärkung erfolgen. Der Befehl dient also zur Auswahl der "Sprache" welche für die weitere Kommunikation der Komponente mit dem System notwendig ist.

Ein Steuergerät ist vorliegend ein elektrisches Gerät das Sensorsignale verarbeitet und in Abhängigkeit davon Personenschutzmittel wie Airbags, Gurtstraffer oder Bremsen oder eine Fahrdynamikregelung ansteuert. Das Ansteuern bedeutet dabei das Aktivieren dieser Personenschutzmittel.

Die Auswerteschaltung ist üblicherweise ein Prozessor beispielsweise ein Mikrocontroller, es kann sich jedoch dabei auch um einen ASIC oder eine Kombination aus mehreren integrierten Schaltkreisen oder aus diskreten Bauelementen handeln. Auch ein Mehrrechnersystem oder ein DualCore-System sind vorliegend möglich.

Die wenigstens eine weitere Komponente ist ein Bauelement, das im Steuergerät vorhanden ist und auch zur Ansteuerung der Personenschutzmittel beiträgt. In den abhängigen Ansprüchen sind Beispiele genannt.

Das Signal ist üblicherweise ein Softwarebefehl wie beispielsweise ein SPI-Befehl bei dem Signal kann es sich jedoch auch um ein Multiplex aus Signalen handeln. Das Signal kann auch einfachere Strukturen als ein Softwarebefehl aufweisen.

Das Ereignis kann beispielsweise durch unterschiedlichste Fehler hervorgerufen werden. Dazu zählen beispielsweise Fehler in der Auswerteschaltung oder anderen Komponenten des Steuergeräts.

Mögliche weitere Ursachen für dieses Ereignis:
- Unterspannung des Mikrocontroller (Überwachung im Mikrocontroller selbst),
- Versorgungsspannungen der Komponenten außerhalb des zugelassenen Bereichs,
- Sicherheitsüberwachung (Watchdog)
- Software muss selbst einen Reset ausführen (z.B. Diagnosemodus/Start des Bootloaders im Mikrocontroller nach Softwareaktualisierung),
- Kundenanforderung (Resetanforderung z.B. über CAN um alle Steuergeräte rücksetzten zu können)

Unter einer Einstellung wird vorliegend das Festlegen wenigstens eines Parameters der wenigstens einen Komponente verstanden. Unter dem wenigstens einen Reset ist ein Neustart zu verstehen, der die wenigstens eine Komponente in einen definierten Zustand bringt. Der Reset ist notwendig, wenn die Auswerteschaltung einen Fehler entdeckt und diesen durch den Reset beheben will.

Erfindungsgemäß ist es, dass die wenigstens eine Komponente eine Sensorik insbesondere eine Beschleunigungssensorik ist. Damit ist es möglich eine solche Beschleunigungssensorik ohne einen Reset-Pin vorzusehen, weil gemäß der Erfindung es möglich ist, über ein Signal den Reset der Sensorik zu erzeugen. Anstatt einer Beschleunigungssensorik können auch eine Körperschallsensorik und/oder eine Drehratensensorik verwendet werden. Auch andere Sensoriken sind möglich.

Durch die in den abhängigen Ansprüchen aufgeführten Maßnahmen und Weiterbildungen sind vorteilhafte Verbesserungen des in den unabhängigen Patentansprüchen angegebene Steuergeräts bzw. Verfahrens zur Ansteuerung von Personenschutzmitteln möglich.

Es ist weiterhin vorteilhaft, dass das Signal das beispielsweise auch ein SPI-Befehl ist, die Einstellung einer Verstärkung bewirkt. Dabei kann eine Auswahl von vier Verstärkungsbereichen beispielsweise vorgenommen werden. Mit der Programmierung der Verstärkung geht der Reset einher, um den Sensor wieder in einen definierten Zustand zu bringen. Damit muss kein neuer SPI-Befehl kreiert werden, sondern es kann ein vorhandener Befehl, nämlich der zur Einstellung der Verstärkung verwendet werden und an den Beginn der Initialisierung gesetzt werden. Die Verstärkung betrifft dabei die Verstärkung des durch die Beschleunigungssensorik erzeugten Beschleunigungssignals.

Es ist weiterhin vorteilhaft, dass der ausgewählte Verstärkungsbereich fest abgespeichert wird, so dass durch den nachfolgenden gewünschten Reset diese vorher übertragene Verstärkungsinformation nicht mehr verloren geht. Insbesondere wird dabei eine Verriegelung der Digitallogik in der wenigstens einen Komponente vorgenommen, um weitere Zugriffe durch die Software zu verhindern.

Die Verriegelung entspricht einem "Schreibschutz". Mit Senden des SPI-Befehls bzw. des Signals zur Einstellung des Verstärkungsbereichs wird der gewünschte Verstärkungsbereich für den anschließenden Reset "eingefroren". Ein Überschreiben ist erst mit dem erneuten Senden des SPI-Befehls nach dem Reset möglich. Dabei würde im Anschluss wieder ein Reset ausgelöst werden.

Es kann vorgesehen sein, dass der SPI-Befehl oder das Signal zweimal hintereinander gesendet werden muss. Dies ist insbesondere aus Sicherheitsgründen erforderlich. Damit werden eventuelle Fehler auf dem SPI-Bus abgefangen, die die wenigstens eine Komponente versehentlich im Betrieb zurücksetzen würden obwohl kein Fehler im Steuergerät vorlag. Dieses doppelte Senden des SPI-Befehls bzw. Signals führt lediglich zur Verdopplung der Zeit bis zum Auslösen des Resets in der wenigstens einen Komponente.

Die Komponente bzw. der Sensor ist so entwickelt, dass intern die Anzahl und die Abfolge des SPI-Befehls bzw. des Signals zum Erzeugen des Resets und gleichzeitigen Einstellen der Verstärkung überwacht werden. Der Befehl oder das Signal muss hintereinander zweimal gesendet werden. Sobald nach dem ersten Senden des SPI-Befehls bzw. des Signals ein anderer SPI-Befehl bzw. Signal gesendet wird, würde die begonnene Resetsequenz und Verstärkungseinstellung abgebrochen werden. Wird aber die Anzahl und Abfolge eingehalten, wird der in diesem Falle erneut gewünschte Verstärkungsbereich gespeichert und anschließend ein Reset ausgeführt werden.

Ausführungsbeispiele der Erfindung sind in der Zeichnung dargestellt und werden in der nachfolgenden Beschreibung näher erläutert.

Es zeigen
Figur 1 ein Blockschaltbild des erfindungsgemäßen Steuergeräts mit angeschlossenen Komponenten in einem Fahrzeug,
Figur 2 ein Zeitablaufdiagramm und
Figur 3 ein Flussdiagramm des erfindungsgemäßen Verfahrens.

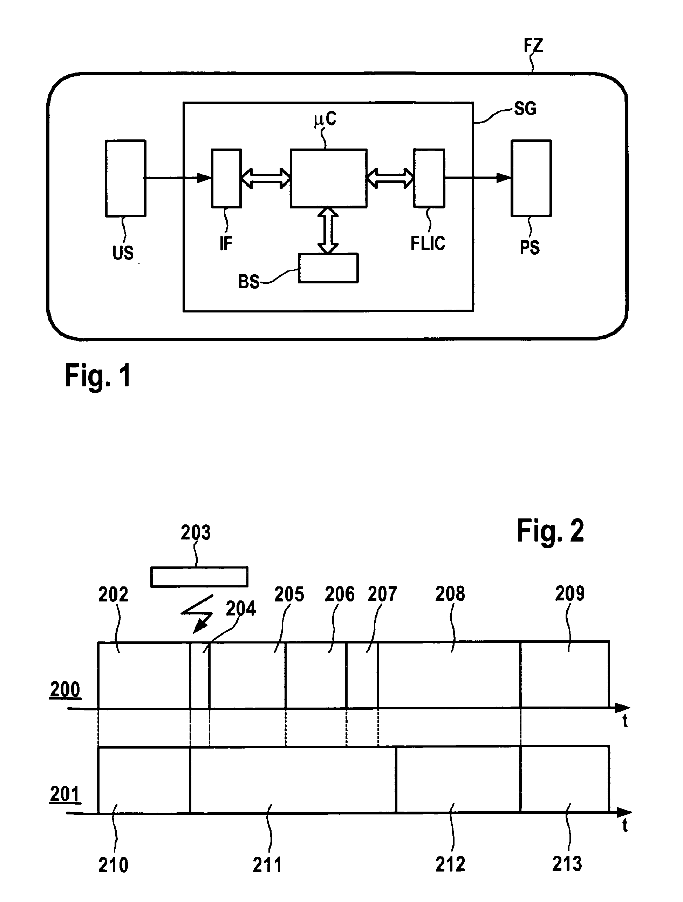

Figur 1 zeigt in einem Blockschaltbild das erfindungsgemäße Steuergerät SG in einem Fahrzeug FZ mit angeschlossenen Komponenten US und PS. Die Darstellung ist vorliegend vereinfacht und konzentriert sich auf die Erfindung. Die Unfallsensorik US die sich außerhalb des Steuergeräts befindet, beispielsweise Körperschall-, Umfeld-, Beschleunigungs- und/oder Luftdrucksensoren übertragen ihre Signale an eine Schnittstelle I F im Steuergerät SG. Diese Schnittstelle ist vorliegend als integrierter Schaltkreis ausgebildet. Es ist möglich, dass die Schnittstelle Teil eines anderen integrierten Schaltkreises ist oder beispielsweise auch als Softwareschnittstelle vorhanden ist. Die Schnittstelle I F überträgt diese Signale weiter an den Mikrocontroller µC aus der Auswerteschaltung. Der Mikrocontroller µC erhält weiterhin Sensorsignale von der Beschleunigungssensorik BS. Der Mikrocontroller µC wertet die Sensorsignale mittels Auswertealgorithmen aus um zu bestimmen, ob die Personenschutzmittel PS anzusteuern sind oder nicht. Ist das der Fall, dann überträgt der Mikrocontroller µC entsprechende Signale an die Ansteuerschaltung FLIC die elektrisch steuerbare Leistungsschalter enthält, die in Abhängigkeit von diesen Signalen geschlossen werden um eine Bestromung der Personenschutzmittel und dabei beispielsweise der Zündelemente zu bewirken.

Erfindungsgemäß ist vorgesehen, dass der Mikrocontroller µC in einer Initialisierungsphase durch eine Übertragung eines SPI-Befehls als dem Signal an die Beschleunigungssensorik BS einen Reset des Beschleunigungssensors BS bewirkt, sodass der Beschleunigungssensor BS sich initialisieren kann. Dazu überträgt der Mikrocontroller µC der Beschleunigungssensorik BS einen Befehl, der eine Einstellung bewirkt und auch den internen Reset des Beschleunigungssensors BS, den dieser für den Einschaltvorgang sowieso aufweist. Die Einstellung kann beispielsweise die Auswahl des Verstärkungsbereichs sein. Aber auch andere geeignete Befehle sind möglich, wenn sie mit dem internen Reset der Beschleunigungssensorik BS gekoppelt sind.

Neben einer Beschleunigungssensorik können auch andere Komponenten in dieser Weise resetiert werden.

Figur 2 zeigt ein Zeitablaufdiagramm zur Erläuterung der Erfindung. Insbesondere wird daran das erfindungsgemäße Verfahren erläutert. In der ersten Zeile wird ein Standardsystem mit einer Resetleitung gezeigt, gekennzeichnet durch das Bezugszeichen 200 und in der zweiten Zeile wird das erfindungsgemäße System ohne Resetleitung gezeigt. Die zweite Zeile ist durch das Bezugszeichen 201 gekennzeichnet. In der ersten Zeile wird in Block 202 das Steuergerät in Funktion gehalten, wobei zum Zeitpunkt 204 ein internes Fehlerereignis 203 auftritt. Dieses Fehlerereignis ist eine beispielhafte Ausprägung des Ereignisses. Daraufhin wird im Block 205 über die Resetleitungen ein niedriger Pegel angelegt um über diese Resetleitung die Komponenten zurückzusetzen. Dann setzt sich im Block 206 der Mikrocontroller 200 selbst zurück. Sodann beginnt der Start der Arbeitsweise des Mikrocontrollers µC im Block 207, die im Block 208 durch die Ausführung des Programmcodes gekennzeichnet ist. Damit wird die Initialisierung aller Komponenten erreicht. Im Block 209 ist das Steuergerät wieder in Normalfunktion.

Für die Zeile 201 wird nunmehr das erfindungsgemäße Verfahren beschrieben. Im Block 210 ist der Sensor im Normalbetrieb. Wiederum tritt das Fehlerereignis 203 auf. Dabei wartet der Sensor im Block 211 auf SPI-Befehle. Er gibt keine Daten aus und ist dabei aktiv in Ruhe.

Der Sensor selbst ist ein passiv kommunizierendes Element. Er wird im Steuergerät in einem Master-Slave Kommunikationssystem eingesetzt, wobei er selbst immer nur als Slave verbaut werden kann. Somit kann der Sensor nur dann Nachrichten über den SPI-Bus schicken, wenn er zeitgleich dazu vom Mikrocontroller (Master) angesteuert/beauftragt wird. Dies erfolgt über SPI-Befehle die die entsprechende Handlung bzw. Antwort immer Sensor veranlassen. Solange der Mikrocontroller selbst im Reset ist oder keine zugelassenen Befehle an den Sensor gesendet werden, verhält sich der Sensor passiv. Er ist in Funktion, liefert aber keine Informationen an das System zurück.

Im Block 212 beginnt die Sensorinitialisierung indem der Mikrocontroller µC den Befehl Select_G_Range an den Sensor überträgt. Dies bewirkt eine Auslösung eines Reset im Sensor und damit die Initialisierung des Sensors. Danach im Block 213 ist das Steuergerät und der Sensor wieder in Normalfunktion.

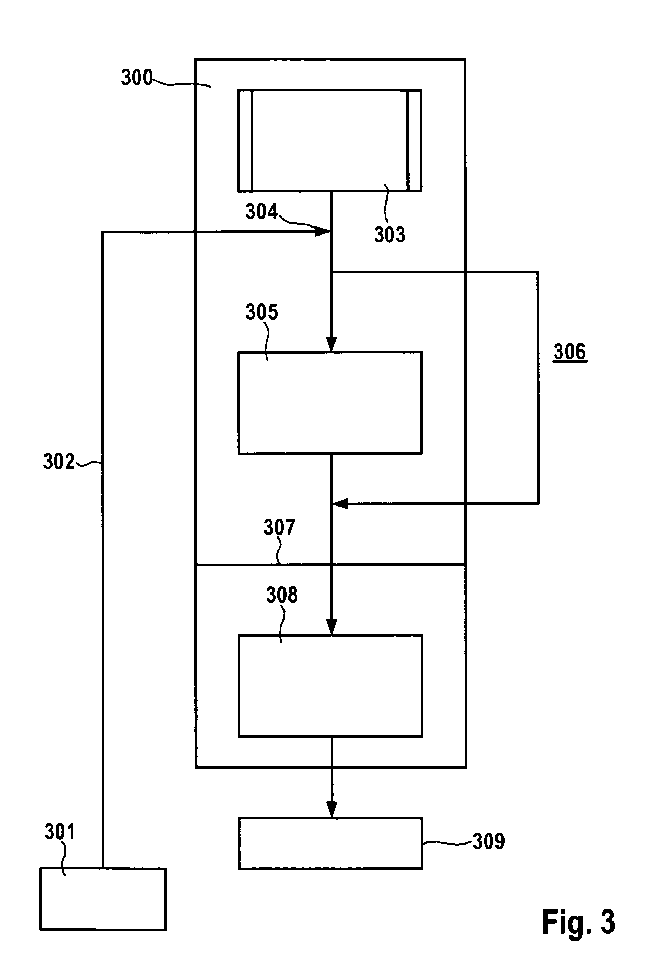

Figur 3 zeigt das erfindungsgemäße Verfahren anhand eines Flussdiagramms. Im Block 300 sind die Aktionen des Sensors dargestellt. Durch den Kaltstart wird im Block 303 die Power-On Funktion durchgeführt. Im Betrieb wird der Warmstart 301 durchgeführt, dass heißt er wird neu initialisiert da das Steuergerät einen Fehler erkannt hat. Dafür wird ein SPI-Programmierbefehl 302 an den Sensor 300 übertragen. Dieser Programmierbefehl 304 im Sensor 300 bewirkt im Verfahrensschritt 305, dass das Protokoll ausgewählt wird und eine Verriegelung softwaremäßig des Sensors vorliegt. Eine Änderung des Protokolls ist bis zum erneuten Power-On nicht mehr möglich. Wurde das Protokoll jedoch bereits ausgewählt, dann wird 305 durch 306 übersprungen. Im Block 307 erfolgt der Start der Sensorinitialisierung der im Block 308 durch ein zweimaliges Senden des Befehls Select_G_Range vom Mikrocontroller zum Sensor gekennzeichnet ist. Dann führt der Sensor den internen Reset durch während der Verstärkungsbereich abgespeichert bleibt. In Verfahrensschritt 309 beginnt dann die Sensorinitialisierung.

## Patentansprüche

1. Steuergerät (SG) zur Ansteuerung von Personenschutzmitteln (PS) für ein Fahrzeug (FZ) mit wenigstens einer Auswerteschaltung (µC) und wenigstens einer weiteren Komponente (BS), die die Ansteuerung bewirken, wobei die Auswerteschaltung (µC) zur Übertragung eines Signals an die wenigstens eine weitere Komponente (BS) vorgesehen ist, wobei die Auswerteschaltung (µC) in Abhängigkeit von einem Ereignis das Signal an die wenigstens eine weitere Komponente (BS) überträgt, wobei die wenigstens eine weitere Komponente (BS) eine Sensorik (US) ist und in Abhängigkeit von dem Signal eine Einstellung und wenigstens einen Reset vornimmt, **dadurch gekennzeichnet, dass** im laufenden Betrieb des Steuergeräts (SG) zur Veranlassung des Resets in der wenigstens einen weiteren Komponente (BS), bei der kein separater Reseteingang vorliegen muss, die Auswerteschaltung (µC) das Signal an die wenigstens eine weitere Komponente (BS) überträgt, wobei das Signal eine weitere Einstellung bewirkt und in der wenigstens einen weiteren Komponente (BS) zur Aktivierung der weiteren Einstellung mit einem internen Reset verknüpft ist.

2. Steuergerät nach einem der vorhergehenden Ansprüche, **dadurch gekennzeichnet, dass** zur Übertragung ein SPI-Bus vorgesehen ist.

3. Verfahren zur Ansteuerung von Personenschutzmitteln (PS) für ein Fahrzeug (FZ) wobei wenigsten eine Auswerteschaltung (µC) und wenigstens eine weitere Komponente (BS) die Ansteuerung bewirken, wobei von der wenigstens einen Auswerteschaltung (µC) ein Signal an die wenigstens eine Komponente (BS) übertragen wird, wobei in Abhängigkeit von einem Ereignis das Signal von der Auswerteschaltung (µC) zu der wenigstens einen Komponente übertragen wird, wobei in der wenigstens einen weiteren Komponente (BS) in Abhängigkeit von dem
Signal eine Einstellung und wenigstens einen Reset vorgenommen wird, **dadurch gekennzeichnet, dass** im laufenden Betrieb des Steuergräts (SG) zur Veranlassungs des Resets in der wenigstens einen weiteren Komponente (BS), bei der kein separater Reseteingang vorliegen muss, von der Auswerteschaltung (µC) an die wenigstens eine weitere Komponente (BS) ein Signal übertragen wird, das eine weitere Einstellung bewirkt wird und in der wenigstens einen weiteren Komponente (BS) zur Aktivierung der weiteren Einstellung mit einem internen Reset verknüpft wird.

4. Verfahren nach Anspruch 3, **dadurch gekennzeichnet, dass** in Abhängigkeit von dem Signal, einer von vier Verstärkungsbereichen ausgewählt wird, dass danach wenigstens ein Reset der wenigstens einer Komponente ausgeführt wird, wobei der ausgewählte
Verstärkungsbereich fest abgespeichert wird und dass die wenigstens eine Komponente softwaremäßig verriegelt wird.

5. Verfahren nach einem der Ansprüche 3 bis 4, **dadurch gekennzeichnet, dass** das Signal ein SPI-Befehl ist.

6. Verfahren nach einem der Ansprüche 3 bis 5, **dadurch gekennzeichnet, dass** das Signal zweimal übertragen wird.

7. Verfahren nach einem der Ansprüche 3 bis 6, **dadurch gekennzeichnet dass** in Abhängigkeit von dem Signal ein Protokoll ausgewertet wird.

## Claims

1. Control device (SG) for actuating personal protection means (PS) for a vehicle (FZ), having at least one evaluation circuit (µC) and at least one further component (BS) which effect actuation, the evaluation circuit (µC) being intended to transmit a signal to the at least one further component (BS), the evaluation circuit (µC) transmitting the signal to the at least one further component (BS) on the basis of an event, the at least one further component (BS) being a sensor system (US) and carrying out a setting operation and at least one reset on the basis of the signal, **characterized in that**, in order to cause the reset in the at least one further component (BS) in which there need not be a separate reset input, the evaluation circuit (µC) transmits the signal to the at least one further component (BS) during ongoing operation of the control device (SG), the signal effecting a further setting operation and being linked to an internal reset in the at least one further component (BS) in order to activate the further setting operation.

2. Control device according to the preceding claim, **characterized in that** an SPI bus is provided for the purpose of transmission.

3. Method for actuating personal protection means (PS) for a vehicle (FZ), at least one evaluation circuit (µC) and at least one further component (BS) effecting actuation, the at least one evaluation circuit (µC) transmitting a signal to the at least one component (BS), the signal being transmitted from the evaluation circuit (µC) to the at least one component on the basis of an event, a setting operation and at least one reset being carried out in the at least one further component (BS) on the basis of the signal, **characterized in that**, in order to cause the reset in the at least one further component (BS) in which there need not be a separate reset input, the evaluation circuit (µC) transmits a signal to the at least one further component (BS) during ongoing operation of the control device (SG), which signal effects a further setting operation and is linked to an internal reset in the at least one further component (BS) in order to activate the further setting operation.

4. Method according to Claim 3, **characterized in that** one of four gain ranges is selected on the basis of the signal, **in that** at least one reset of the at least one component is then carried out, the selected gain range being permanently stored, and **in that** the at least one component is locked using software.

5. Method according to either of Claims 3 and 4, **characterized in that** the signal is an SPI command.

6. Method according to one of Claims 3 to 5, **characterized in that** the signal is transmitted twice.

7. Method according to one of Claims 3 to 6, **characterized in that** a protocol is evaluated on the basis of the signal.

## Revendications

1. Appareil de commande (SG) destiné à commander des moyens (PS) de protection des personnes pour un véhicule (FZ),
l'appareil de commande présentant au moins un circuit d'évaluation (µC) et au moins un autre composant (BS) qui activent la commande,
le circuit d'évaluation (µC) étant prévu pour transmettre un signal à l'autre composant ou aux autres composants (BS),
le circuit d'évaluation (µC) transférant à l'autre composant ou aux autres composants (BS) le signal en fonction d'un événement,
l'autre composant ou les autres composants (BS) étant un ensemble (US) de sondes et effectuant un réglage et au moins une réinitialisation en fonction du signal,
**caractérisé en ce que**
lorsque l'appareil de commande (SG) est en fonctionnement permanent, pour permettre la réinitialisation de l'autre composant ou des autres composants (BS) pour lesquels une entrée distincte de réinitialisation ne doit pas être prévue, le circuit d'évaluation (µC) transmet le signal à l'autre composant ou aux autres composants (BS), le signal ayant pour effet la poursuite du réglage et étant associé à une réinitialisation interne de l'autre ou des autres composants (BS) en vue de l'activation de la poursuite du réglage.

2. Appareil de commande selon la revendication précédente, **caractérisé en ce qu'**un bus SPI est prévu pour le transfert.

3. Procédé de commande de moyens (PS) de protection des personnes pour un véhicule (FZ),
dans lequel au moins un circuit d'évaluation (µC) et un autre ou des autres composants (BS) activent la commande,
un signal étant transmis à l'autre ou aux autres composants (BS) par le ou les circuits d'évaluation (µC),
le signal étant transmis par le circuit d'évaluation (µC) à l'autre ou aux autres composants en fonction d'un événement,
un réglage et au moins une réinitialisation étant réalisés dans l'autre ou dans les autres composants (BS) en fonction du signal,
**caractérisé en ce que**
lorsque l'appareil de commande (SG) est en fonctionnement permanent, pour permettre la réinitialisation de l'autre composant ou des autres composants (BS) pour lesquels une entrée distincte de réinitialisation ne doit pas être prévue, le circuit d'évaluation (µC) transmet le signal à l'autre composant ou aux autres composants (BS), le signal ayant pour effet la poursuite du réglage et étant associé à une réinitialisation interne de l'autre ou des autres composants (BS) en vue de l'activation de la poursuite du réglage.

4. Procédé selon la revendication 3, **caractérisé en ce qu'**une parmi quatre plages d'amplifications est sélectionnée en fonction du signal, **en ce qu'**ensuite au moins une réinitialisation du ou des composants est réalisée et **en ce que** la plage d'amplification sélectionnée est conservée en mémoire fixe et le ou les composants sont verrouillés par logiciel.

5. Procédé selon l'une des revendications 3 à 4, **caractérisé en ce que** le signal est une commande SPI.

6. Procédé selon l'une des revendications 3 à 5, **caractérisé en ce que** le signal est transmis deux fois.

7. Procédé selon l'une des revendications 3 à 6, **caractérisé en ce qu'**un protocole est évalué en fonction du signal.
